Europäisches Patentamt

European Patent Office

Office européen des brevets

(19)

(11) Veröffentlichungsnummer: **0 030 674**
**B1**

(12) **EUROPÄISCHE PATENTSCHRIFT**

(45) Veröffentlichungstag der Patentschrift:
**14.12.83**

(51) Int. Cl.³: **B 23 Q 3/157**

(21) Anmeldenummer: **80107520.1**

(22) Anmeldetag: **02.12.80**

(54) Werkzeugwechselvorrichtung an Werkzeugmaschinen, insbesondere an Horizontal- Bohr- und Fräswerken.

(30) Priorität: **15.12.79 DE 2950577**

(43) Veröffentlichungstag der Anmeldung:
**24.06.81 Patentblatt 81/25**

(45) Bekanntmachung des Hinweises auf die Patenterteilung:
**14.12.83 Patentblatt 83/50**

(84) Benannte Vertragsstaaten:
**BE DE FR GB SE**

(56) Entgegenhaltungen:
**DE - A - 1 951 043**
**DE - A - 2 629 835**
**DE - A - 2 844 319**
**FR - A - 2 410 534**
**US - A - 3 348 298**

**Die Akte enthält technische Angaben, die nach dem Eingang der Anmeldung eingereicht wurden und die nicht in dieser Patentschrift enthalten sind.**

(73) Patentinhaber: **Scharmann GmbH & Co.,**
**Hugo-Junkers-Strasse 12-32,**
**D-4050 Mönchengladbach 2 (DE)**

(72) Erfinder: **Esser, Karl-Josef, Ing.-grad, Pauenstrasse 89,**
**D-4050 Mönchengladbach 5 (DE).**

(74) Vertreter: **Wangemann, Horst, Dipl.-Ing.,**
**Stresemannstrasse 28, D-4000 Düsseldorf (DE)**

Werkzeugwechselvorrichtung an Werkzeugmaschinen, insbesondere an Horizontal-Bohr-und-Fräs-Werken

Die Erfindung bezieht sich auf eine Werkzeugwechselvorrichtung an Werkzeugmaschinen, insbesondere an eine Bohrspindel aufweisenden Horizontal-Bohr-und-Fräs-Werken, mit einem beidendig mit je einer zangenartigen Greifervorrichtung versehenen und um seine horizontale Achse drehbaren zweiarmigen Wechselarm, der an einem um eine zu der Wechselarmachse parallelen Achse schwenkbaren Schwenkarm drehbar angeordnet ist, wobei der Schwenkarm und der Wechselarm gleichzeitig gegenläufige Drehbewegungen ausführen, und wobei das den Schwenkarm und den Wechselarm tragende Gehäuse an dem Spindelkasten längsverschieblich angeordnet ist.

Durch die DE-A-1 951 043 ist eine derartige Werkzeugwechselvorrichtung bekannt, bei der der Wechselarm beidendig mit einer Greifereinrichtung versehen ist und der Schwenkarm teleskopartig verlänger- und verkürzbar ist, so dass ein gemeinsamer Antrieb oder zwei auf einem geringen Raum anzuordnende Antriebe nicht möglich ist bzw. sind. – Die FR-A-2 410 534 betrifft eine Vorrichtung, die einen Werkzeughalter oder ein Werkzeugmagazin vorsieht, in dem die Werkzeugschäfte rechtwinklig zur Spindelachse gelegen sind und der Schwenkarm mit dem Wechselarm daher um eine senkrechte Achse zu drehen ist, um die Werkzeuge dem Halter oder Magazin entnehmen und sie in die Spindel einstecken zu können oder umgekehrt zu verfahren. Der Platzbedarf neben der Spindel oder dem Spindelkasten ist wie auch der Bedarf an Antriebsmittel zur Erzeugung einer dreifachen Dreh- bzw. Schwenkbewegung erheblich. Gleichwohl aber wird bei dieser bekannten Vorrichtung das zu wechselnde Werkzeug längs einer flachen Kurve oder einer linearen Bahn aus seiner Zwischenstellung parallel zur Bohrspindel bis auf Höhe der Bohrspindel und umgekehrt bewegt, was den Vorteil hat, dass ausser kurzen Wechselwegen die Greifermittel am Ende des Wechselarmes als symmetrisch beidseitig des Werkzeugkonus wirksame Greiferbacken ausgebildet werden können, die ein sicheres und verschleissarmes Ergreifen der Werkzeuge garantieren.

Diesen bekannten Vorrichtungen gegenüber liegt der Erfindung die Aufgabe zugrunde, eine Vorrichtung der beschriebenen Gattung mit geringem Platzbedarf neben der Spindel bzw. dem Spindelkasten, z. B. für die nahe Anordnung eines Werkzeugmagazins an dem Spindelkasten zur Erzielung kurzer zeitsparender Wechselwege auf einer flach gekrümmten oder sogar linearen Bahn oder für das nahe Herantreten der Bedienungsperson an den Wechselarm bei halbautomatischen Wechselvorrichtungen zu schaffen, wobei die Antriebsmittel für den Wechselarm und den Schwenkarm konstruktiv einfach und ebenfalls platzsparend für die gleichzeitige und gegenläufige Bewegung der beiden Arme sind.

Zur Lösung dieser Aufgabe sieht die Erfindung vor, dass der Schwenkarm als ein mit einer angetriebenen Hohlwelle verbundener Hohlarm ausgebildet ist, der ein Planetenradgetriebe zur Drehung des Wechselarmes aufnimmt, wobei das Planetenradgetriebe von einer die Hohlwelle durchsetzenden Antriebswelle angetrieben ist und die Hohlwelle und die Antriebswelle unabhängig voneinander durch Zylinder-Kolbenaggregate mittels Zahnstangen antreibbar und arretierbar sind und wobei die Zahnstangen 20, 21 die Hohlwelle und die Antriebswelle mit einem dem Verhältnis der Schwenkbewegungen des Schwenkarmes zu der gleichzeitigen, gegenläufigen Drehbewegung des Wechselarmes entsprechenden Übersetzungsverhältnis antreiben.

Mit Hilfe der Merkmale der Unteransprüche wird der Gegenstand des Hauptanspruches verbessert und weitergebildet.

Auf der Zeichnung sind Ausführungsbeispiele der erfindungsgemässen Wechselvorrichtung dargestellt, und zwar zeigen hierbei die Fig. 1 bis 12 eine halbautomatische und die Fig. 13 bis 21 eine vollautomatische Vorrichtung. Im einzelnen stellen dar:

Fig. 1 eine Frontansicht eines Horizontal-Bohr- und Fräswerkes mit der Werkzeugwechselvorrichtung nach der Erfindung;

Fig. 2 und 3 eine Seitenansicht und eine Draufsicht eines Bohr- und Fräswerkes mit den Antriebsteilen des zweiarmigen Wechselarmes sowie des Schwenkarmes;

Fig. 4 bis 11 einzelne Stellungen des Wechselarmes sowie des Schwenkarmes (hierbei ist zur Verdeutlichung der Schwenkarm vor dem Wechselarm dargestellt);

Fig. 12 in vergrössertem Massstab gegenüber Fig. 2 die Antriebseinrichtung der beiden Arme;

Fig. 13 bis 20 die einzelnen Stellungen des Wechselarmes und des Schwenkarmes bei einer vollautomatischen Vorrichtung;

Fig. 21 die Ausbildung einer Antriebseinrichtung der beiden Arme mit je einer Arretiervorrichtung der Arme in einer bestimmten Stellung und

Fig. 22 die von den Greifervorrichtungen an den Enden eines Wechselarmes beschriebenen flachen Koppelkurven bei gleichzeitiger gegenläufiger Drehung um 90 bzw. 180° gegenüber dem Schwenkarm.

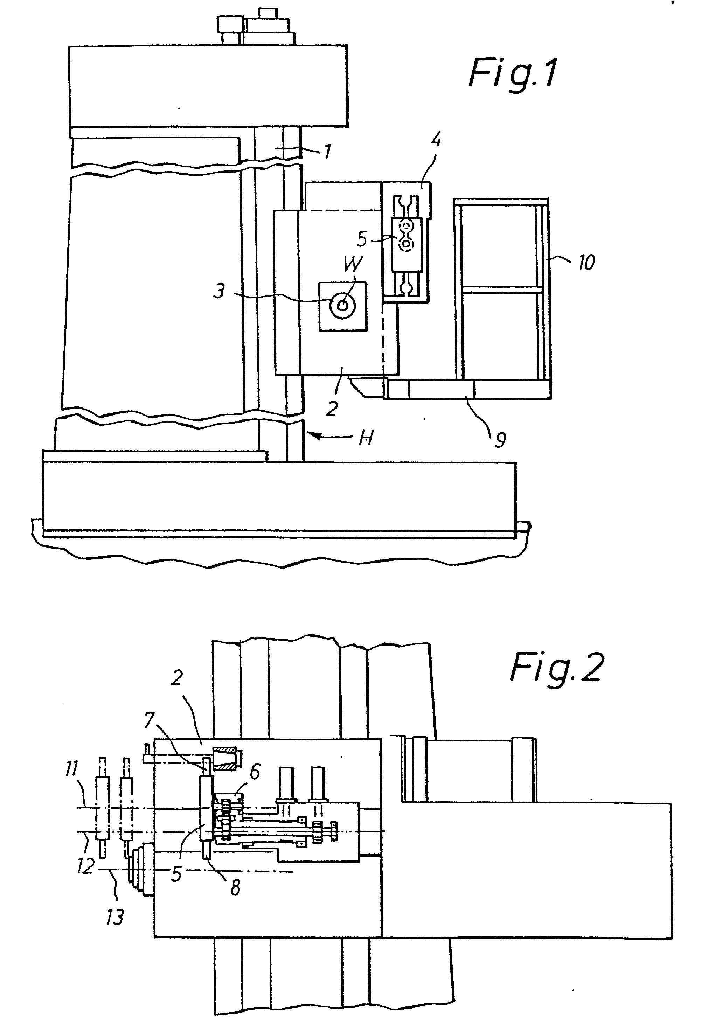

An dem senkrechten Ständer 1 des Horizontal-Bohr- und Fräswerkes H ist der Spindelkasten 2 in senkrechter Richtung verstellbar, der die an seinem freien Ende das Bearbeitungswerkzeug W tragende Bohrspindel 3 aufweist. Seitlich des Spindelkastens ist an einem Gehäuse 4 der zweiarmige Wechselarm 5 und der Schwenkarm 6 gelagert (Fig. 2). Der zweiarmige Wechselarm 5, der in seiner Mitte an dem Schwenkarm gelagert ist, besitzt an seinen Enden die beiden Greifervorrichtungen 7, 8, die bekannter Anordnung und Art sind. Sie sind in der Lage, je ein Werkzeug aufzunehmen und in unten noch näher beschriebener Weise entweder in die Bohrspindel 3 einzusetzen oder aus dieser herauszuziehen bzw. ein neues Werkzeug aufzunehmen, um dieses nach Drehen des Armes 5 und Schwenken des Armes 6 in die Bohrspindel einzusetzen.

Der Spindelkasten 2 trägt an seiner Unterseite eine seitlich ausladende Standbühne 9, die mit einem Rahmen oder Gitter 10 versehen sein kann und einerseits als Arbeitsplatz der Bedienungsperson, anderseits zur Aufnahme von Steuer- und Regelteilen und von Werkzeugen dient.

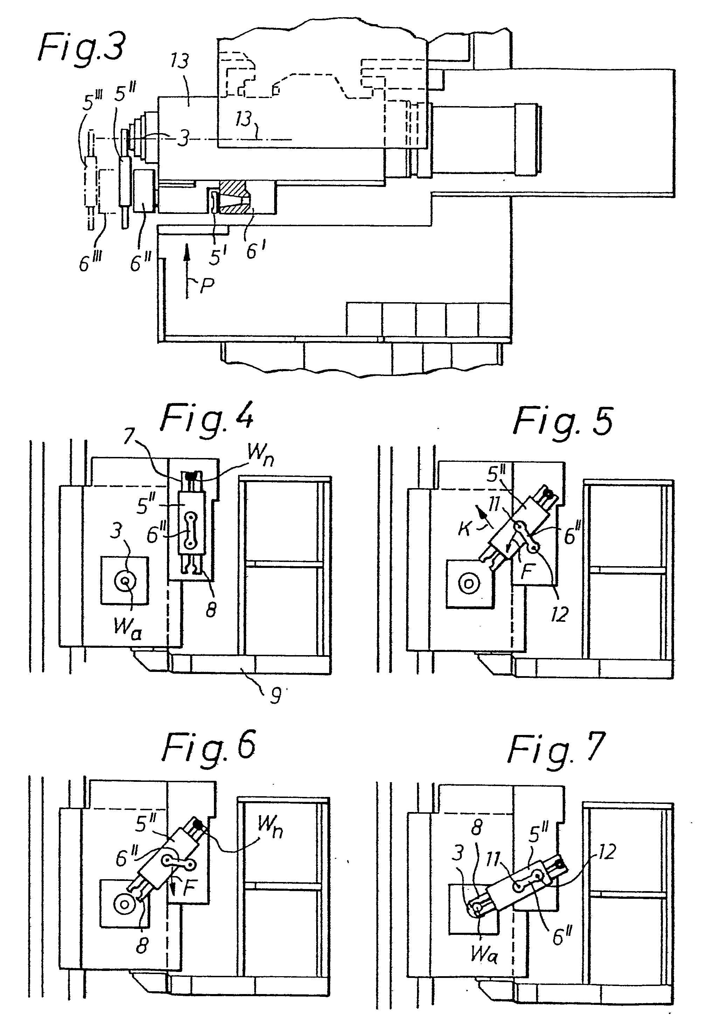

Um einerseits diese von dem Spindelkasten 2 getragene Standbühne 9 nicht zu gross werden zu lassen und anderseits die Bedienungsperson beim Drehen des zweiarmigen Werkzeugarmes 5 nicht zu gefährden und um ferner der Bedienungsperson die Möglichkeit zu geben, dicht neben dem in seiner Ruhestellung (Fig. 1) befindlichen Wechselarm 5 das neue Werkzeug in den Wechselarm einsetzen bzw. das benutzte Werkzeug aus diesem herausnehmen zu können, vollführt der Wechselarm eine kombinierte, aus zwei sich überlagernden, d.h. gleichzeitigen gegenläufigen Bewegungen resultierende Bewegung, und zwar einerseits aus einer Drehbewegung des Armes 5 um seine Achse 11 und aus einer in entgegengesetzter Richtung zeigende Schwenkbewegung des Armes 6 um seine Achse 12, wobei die Achse 11 parallel zur Achse 12 gelegen ist. Die beiden Bewegungen sind in den Fig. 4 bis 11 wiedergegeben. Zusätzlich zu diesen Bewegungen des zweiarmigen Wechselarmes 5 und des Schwenkarmes 6 vollführen diese noch axiale Bewegungen in Richtung der Achse 12 aus einer Stellung 5' in eine Stellung 5'' und von hier in eine Stellung 5''' bzw. 6' in 6'' und 6''' und umgekehrt, wie sie in Fig. 3 wiedergegeben sind. In der Ausgangsstellung 5' (bzw. 6') kann die Bedienungsperson die Werkzeuge in der senkrechten Stellung des Wechselarmes und des Schwenkarmes wechseln. Hierbei ist der Wechselarm 5 und der Schwenkarm 6 platzsparend neben dem Spindelkasten 2 gelegen. Anderseits sind die Werkzeuge in dieser Ausgangsstellung der Arme 5 und 6 gut zugänglich.

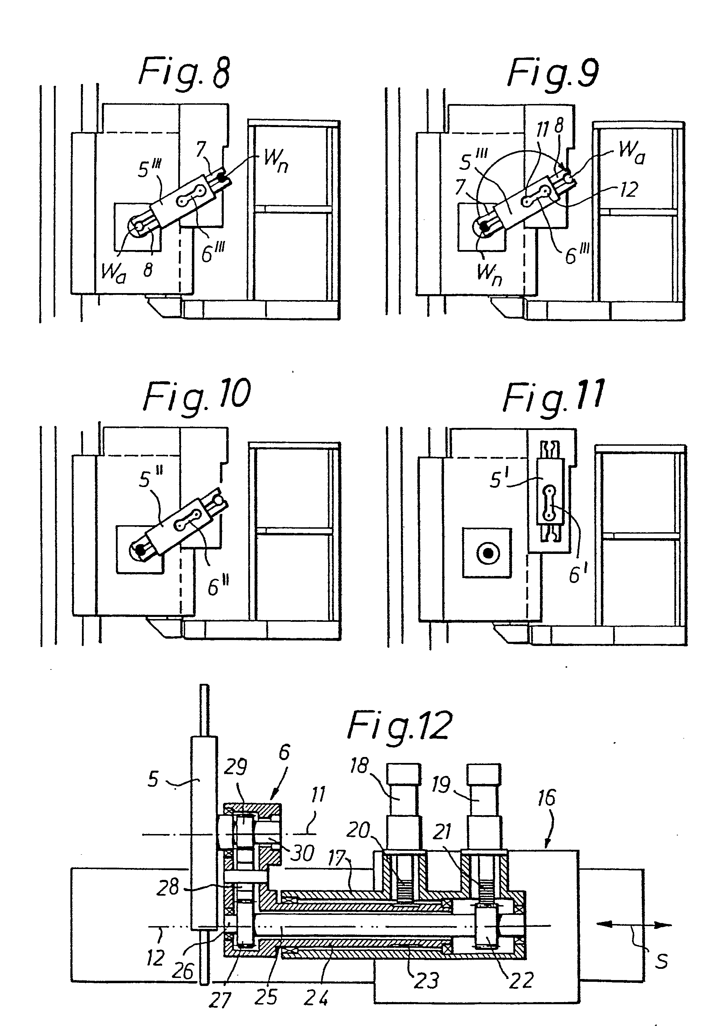

Aus der Ausgangsstellung 5', 6' (Fig. 3), in der die beiden Arme 5, 6 parallel und senkrecht zueinanderstehen und in der der Arm 5 ein neues Werkzeug Wn trägt, werden die beiden Arme zunächst in die Stellung 5'', 6'' axial vorgefahren (Fig. 4). Nach Erreichen dieser Stellung dreht sich der Wechselarm 5 in Richtung des Pfeiles K, d.h. im Uhrzeigersinn um die Achse 11, während gleichzeitig der gegenüber dem Wechselarm wesentlich kürzere Schwenkarm 6 eine entgegengesetzte Schwenkbewegung in Richtung des Pfeiles F, d.h. entgegen dem Uhrzeigersinn, ausführt. Nach Beendigung der beiden überlagerten Bewegungen in Richtung der Pfeile K und F der Arme 5, 6 nehmen diese die Stellung nach Fig. 7 ein, in der die bislang geöffnete Greifervorrichtung 8 das benutzte Werkzeug $W_a$ in der Bohrspindel 3 erfassen kann. Bei einer weiteren Axialbewegung der Arme in die Stellungen 5''' und 6''' wird das benutzte Werkzeug $W_a$ aus der Bohrspindel 3 gezogen (Fig. 8).

In dieser vordersten Stellung 5''', 6''' der Arme bedarf es eines Drehens des Wechselarmes 5 um 180°, um das neue Werkzeug $W_a$ in eine achsgleiche Stellung mit der Mittelachse 13 der Bohrspindel 3 (Fig. 2 und 3) zu bringen. Hierzu dreht sich gemäss Fig. 9 unter Stillstand des Schwenkarmes 6 der Wechselarm 5 um seine Achse 11, so dass nunmehr das neue Werkzeug $W_a$ beim Zurückziehen der Arme 5, 6 in die Stellung 5'', 6'' in den Aufnahmekonus der Bohrspindel 3 eingeschoben werden kann. Nach Öffnen der Greifervorrichtung 7, nachdem die Haltevorrichtung der Spindel 3 das neue Werkzeug $W_a$ erfasst hat, können die Arme 5, 6 wieder gemäss Fig. 10 und 11 zunächst senkrecht gestellt und in ihre Ausgangsstellung 5', 6' gemäss Fig. 3 zurückgeschwenkt und axial zurückgefahren werden. Die Dreh- und Schwenkbewegungen erfolgen gegenläufig und überlagert. In der Ausgangsstellung 5', 6' neben dem Spindelkasten kann die Bedienungsperson das benutzte Werkzeug auswechseln und ein neues Werkzeug in den Arm 5 einsetzen. – Die Arbeit der Greifervorrichtungen 7, 8 ist nicht im einzelnen beschrieben; sie kann in bekannter Weise ausgeführt werden.

Die beiden Arme 5, 6 sind mit ihren Antriebsteilen an einem Teil 16 angeordnet, das durch nicht dargestellte Mittel, z. B. ein Zylinder-Kolbenaggregat, in Richtung des Doppelpfeiles S vor- und zurückgeschoben werden kann (Fig. 12), so dass die Arme 5, 6 die Positionen 5', 6' bis 5''', 6''' einnehmen können. Das Teil 16 weist ein Gehäuse 17 auf, das in seinem rückwärtigen Abschnitt zwei Zylinder-Kolbenaggregate 18, 19 trägt, deren Kolben als Zahnstangen 20, 21 ausgebildet sind oder die solche Zahnstangen betätigen, die ein Ritzel 22 und eine Verzahnung 23 einer Hohlwelle 24 antreiben, die in dem Gehäuse 17 gelagert ist. In dieser Hohlwelle 24 ist horizontal eine Antriebswelle 25 gelagert, auf der das Ritzel 22 drehfest angebracht ist. Bei Betätigung der Zylinder-Kolbenaggregate 18, 19 kann daher einerseits die Hohlwelle 24, anderseits die Welle 25 in Drehung versetzt werden. Durch die beiden Zylinder-Kolbenaggregate 18, 19 können auch die entsprechenden Teile arretiert werden.

Die Hohlwelle 24 weist an ihrem vorderen Abschnitt den als Hohlteil ausgebildeten Schwenkarm 6 auf. In diesem ist die Welle 25 bei 26 gelagert und nimmt ein Zahnrad 27 auf, das drehfest mit der Welle 25 verbunden ist. Über ein Zwischenritzel 28 wird ein weiteres Zahnrad 29 angetrieben, das drehfest auf einem Drehzapfen 30 angeordnet ist, an dessen vorderem Ende der Schwenkarm 5 drehfest angebracht ist.

Um die koordinierten Bewegungen der beiden Arme 5, 6 aus der Stellung nach Fig. 4 in die Stellung nach Fig. 7 zu bewirken, wird zunächst mittels des Zylinder-Kolbenaggregats 19 und der Zahnstange 21 die Welle 25 festgehalten, so dass das Zahnrad 29 eine Planetenrad-Bewegung um das ein stillstehendes Sonnenrad darstellende Zahnrad 27 vollführt, wenn die Welle 24 mittels der Zahnstange 20 gedreht wird. Hierbei schwenkt einerseits der Schwenkarm 6 in Richtung des Pfeiles K und der Arm 5 in Richtung des Pfeiles F (Fig. 5).

Um die Drehbewegung des Wechselarmes 5 um 180° gemäss Fig. 9 zu vollführen, wird das Zylinder-Kolbenaggregat 18 festgelegt, so dass die Hohlwelle 24 arretiert ist, während das Zylinder-Kolbenaggregat 19 eine Drehbewegung der Welle 25 bewirkt, so dass nunmehr alleine der Drehzapfen 30 in Drehung versetzt wird.

Um die Rückstellbewegung der beiden Arme 5, 6 aus der Stellung nach Fig. 10 in die Stellung nach Fig. 11 zu bewirken, wird in analoger Weise mit überlagerten Drehbewegungen der Teile 5, 6 verfahren.

Die vorstehend beschriebene Vorrichtung ist für halbautomatischen Betrieb vorgesehen.

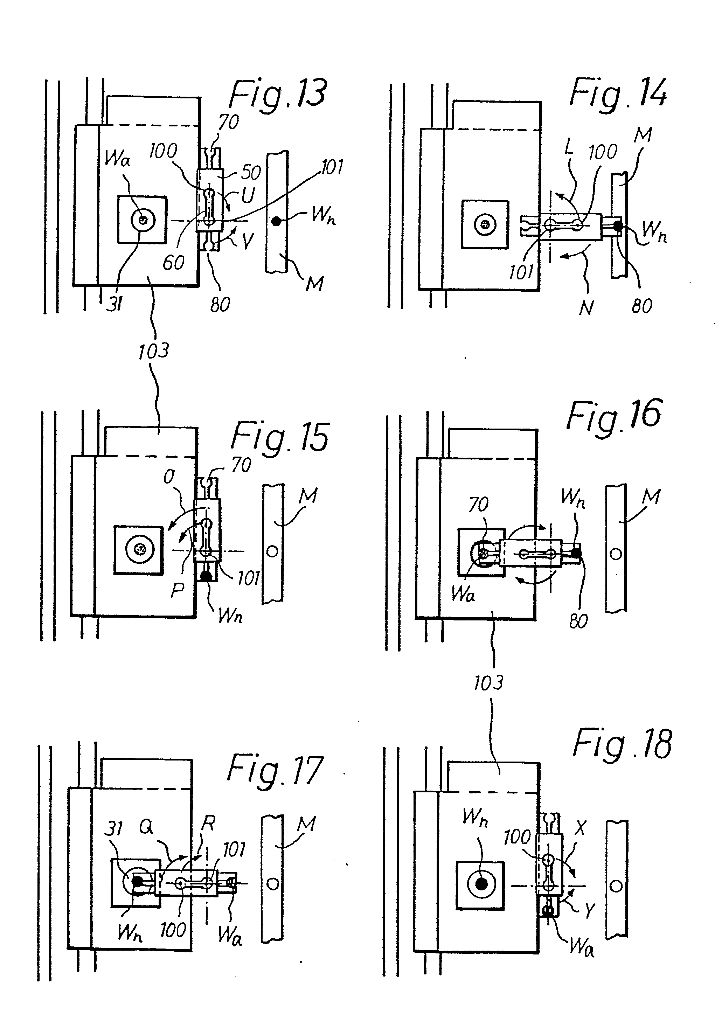

Die Fig. 13 bis 20 lassen die Arbeitsweise einer vollautomatischen Wechselvorrichtung mit einem Wechselarm 50 und einem Schwenkarm 60 erkennen. Der Wechselarm ist wiederum mehr als zweimal so lang wie der Schwenkarm 60, ist in seiner Mitte an dem Schwenkarm drehbar gelagert und trägt an seinen Enden die Greifereinrichtungen 70 und 80.

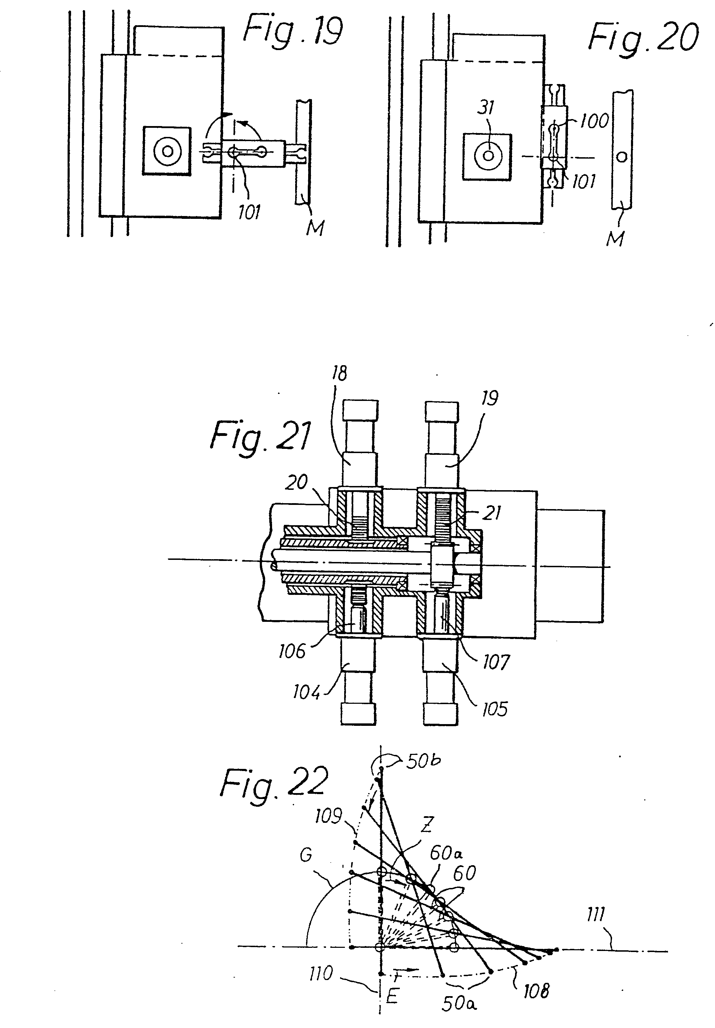

Die unbenutzten Werkzeuge sind einem Magazin M zu entnehmen und der Bohrspindel 31 zuzuführen bzw. ist das benutzte Werkzeug der Bohrspindel zu entnehmen und dem Magazin zuzuführen. Hierbei werden wiederum gleichzeitig gegenläufige Drehbewegungen des Wechselarmes 50 und des Dreharmes 60 ausgeführt. Das Wechseln vollzieht sich im einzelnen wie folgt: In der Stellung nach Fig. 13 nehmen der Wechselarm 50 und der Schwenkarm 60 eine zueinander parallele senkrechte Ausgangsstellung ein. Die Greifervorrichtungen 70 und 80 sind leer. Das benutzte Werkzeug W$_a$ steckt in der Bohrspindel 31, das neue Werkzeug W$_n$ befindet sich im Magazin M. Durch gegenläufiges gleichzeitiges Drehen bzw. Schwenken der Arme 50 und 60 entsprechend den Pfeilen U und V in Fig. 13 um die Achsen 100 und 101, die parallel zueinander gelegen sind, gelangen die Teile in die Stellung nach Fig. 14 in der die Greifervorrichtung 80 das unbenutzte Werkzeug W$_n$ fasst, und aus der heraus wiederum überlagerte Dreh- und Schwenkbewegungen gemäss den Pfeilen L, N erfolgen, die die Teile in die Stellung nach Fig. 15 bringen. Um das benutzte Werkzeug W$_a$ zu ergreifen, vollführen beide Arme gleichzeitig gleichgerichtete Bewegungen nach den Pfeilen O, P in die Lage nach Fig. 16, in der die Greifervorrichtung 70 das Werkzeug W$_a$ in der Bohrspindel 31 erfasst, so dass beide Greifervorrichtungen 70, 80 je ein Werkzeug tragen und ein Drehen des Wechselarmes 50 um 180° bei Stillstand des Armes 60 das neue Werkzeug W$_n$ auf Höhe der Spindel 31 und das benutzte Werkzeug W$_a$ auf Höhe des Magazins bringt (Fig. 17), wonach beide Arme 50, 60 durch Drehen gemäss den Pfeilen Q, R in die Stellung nach Fig. 18 gelangen. Zum Abgeben des Werkzeuges W$_a$ an das Magazin M erfolgen wiederum überlagerte Bewegungen nach den Pfeilen X, Y in die Lage nach Fig. 19 und danach ebenfalls durch überlagerte Bewegungen das gemeinsame Aufrichten der Arme in die Ausgangsstellung nach Fig. 13 und 20. Die zum Herausnehmen bzw. Einstecken der Werkzeuge aus bzw. in die Bohrspindel 31 sowie in bzw. aus dem Magazin M notwendige Axialbewegung vollzieht sich nach Abschluss der entsprechenden Schwenkbewegungen und Drehbewegungen der Arme 50, 60. Das Magazin M kann mehr oder minder weit seitlich hinter dem Spindelkasten 103 angeordnet sein, so dass sich die Stellungen der Arme 50, 60 nach Fig. 14 und 19 seitlich hinter dem Spindelkasten ergibt und lediglich der Dreh- und Schwenkvorgang nach Fig. 15 bis 18 vor dem Spindelkasten geschieht.

Wie bei der Ausführungsform nach Fig. 12 wirkt die Zahnstange 20 mit dem Schwenkarm 60 zusammen, während die Zahnstange 21 den Wechselarm 50 betätigt. Die Zylinder-Kolbenaggregate 18, 19 sind, wie in Fig. 12, wiederum gleichartig und mit gleichen Stäben ausgebildet. Da der Schwenkarm 60 eine kleinere Winkelbewegung als der Wechselarm 50 ausführt, ist das Übersetzungsverhältnis an den Zahnstangen 20, 21 entsprechend gewählt. Vollführt der Schwenkarm 60, wie bei dem Beispiel nach Fig. 13 bis 20, Bewegungen über 90° und der Wechselarm 50 Bewegungen über 180°, dann ist das Übersetzungsverhältnis an beiden Zahnstangen 20, 21 1 : 2.

Um die Mittellage des Schwenkarmes 60 z.B. nach Fig. 13, 15, 18 zu erhalten, ist dem Zylinder-Kolbenaggregat 18 ein gegenüberliegendes Zylinder-Kolbenaggregat 104 mit einer zur Zahnstange 20 koaxialen Kolbenstange 106 zugeordnet, die beim Ausfahren gegen einen die Mittelstellung des Schwenkarmes 60 bestimmenden, nicht dargestellten Anschlag fährt, wobei die Stirnseiten der Teile 20, 106 aneinanderliegen. Nach dem Zurückziehen der Kolbenstange 106 kann die Zahnstange 20 voll ausgefahren werden und damit die Schwenkung des Armes 60 in die eine Richtung bewirkt werden, wobei der Weg des Kolbens im Zylinder-Kolbenaggregat 18 begrenzt ist. Zum Drehen des Armes 60 in die andere Schwenkrichtung aus der Mittellage heraus wird die Zahnstange in ihre andere, ebenfalls durch die Endlage des Kolbens in dem Zylinder 18 bestimmte Stellung bewegt.

Analoges gilt für das Drehen des Wechselarmes 50, wobei dem Zylinder-Kolbenaggregat 19 ein Gegenzylinder-Kolbenaggregat 105 mit einer zu der Zahnstange 21 koaxialen Kolbenstange 107 zugeordnet ist. Auch hier sorgt diese durch Anschlag arretierbare Kolbenstange für die Mittelstellung des Wechselarmes 50, aus der heraus bei vollständigem Ein- bzw. Ausfahren nunmehr auf Grund der Übersetzungsverhältnisse der Zahnstange 21 zu ihrem Ritzel eine volle Drehbewegung z.B. um 180° vollführt wird. Auch hier sind die Endlagen des Wechselarmes durch die Endstellungen des Kolbens des Zylinder-Kolbenaggregates 19 bestimmt.

Fig. 22 veranschaulicht in einem Beispiel die Bewegung der Arme 50, 60, wobei der Schwenkarm 60 durch zwei gestrichelte Linien dargestellt ist und sich mit seinem den Wechselarm 50 tragenden Ende 60a auf dem Kreisbogen G in Richtung des Pfeiles Z im Uhrzeigersinn bewegt. Der in ausgezogener Linie gezeigte Wechselarm 50 bewegt sich mit seinem Ende 50a auf der Koppelkurve 108 in Richtung des Pfeiles E, während das Ende 50b die Koppelkurve 109 beschreibt. Es ist erkennbar, dass beide Armenden 50a und 50b nahe und fast parallel zu den Ebenen 110, 111 verlaufen, in denen der Wechselarm 50 in seiner Ausgangsstellung und seiner Endstellung steht.

**Patentansprüche**

1. Werkzeugwechselvorrichtung an Werkzeugmaschinen, insbesondere an eine Bohrspindel aufweisenden Horizontal-Bohr-und-Fräs-Werken, mit einem beidendig mit je einer zangenartigen Greifervorrichtung versehenen und um seine horizontale Achse drehbaren zweiarmigen Wechselarm (5, 50), der an einem um eine zu der Wechselarmachse parallelen Achse schwenkbaren Schwenkarm (6, 60) drehbar angeordnet ist, wobei der Schwenkarm (6, 60) und der Wechselarm (5, 50) gleichzeitig gegenläufige Drehbewegungen ausführen und wobei das den Schwenkarm (6, 60) und den Wechselarm (5, 50) tragende Gehäuse (4) an dem Spindelkasten (2) längsverschieblich angeordnet ist, dadurch gekennzeichnet, dass der Schwenkarm (6, 60) als ein mit einer angetriebenen Hohlwelle (24) verbundener Hohlarm ausgebildet ist, der ein Planetenradgetriebe (27 bis 29) zur Drehung des Wechselarms (5) aufnimmt, wobei das Planetenradgetriebe (27 bis 29) von einer die Hohlwelle (24) durchsetzenden Antriebswelle (25) angetrieben ist und die Hohlwelle (24) und die Antriebswelle (25) unabhängig voneinander durch Zylinder-Kolbenaggregate (18, 19) mittels Zahnstangen (20, 21) antreibbar und arretierbar sind und wobei die Zahnstangen (20, 21) die Hohlwelle (24) und die Antriebswelle (25) mit einem dem Verhältnis der Schwenkbewegungen des Schwenkarmes (6, 60) zu der gleichzeitigen, gegenläufigen Drehbewegung des Wechselarmes (5, 50) entsprechenden Übersetzungsverhältnis antreiben.

2. Werkzeugwechselvorrichtung nach Anspruch 1, dadurch gekennzeichnet, dass die Hohlwelle (24) und die Antriebswelle (25) mit einer Aussenverzahnung (22, 23) versehen sind und je eine als Kolbenstange eines Zylinder-Kolbenaggregates (18, 19) ausgebildete Zahnstange (20, 21) in ständigem unmittelbarem Eingriff mit der Verzahnung (22 bzw. 23) der beiden Wellen steht.

3. Werkzeugwechselvorrichtung nach Anspruch 1 oder 2, dadurch gekennzeichnet, dass einem oder beiden Zylinder-Kolbenaggregat(en) (18, 19) ein Gegenzylinder (104, 105) zugeordnet ist, dessen oder deren Kolbenstange(n) (106, 107) gleichachsig mit der verzahnten Kolbenstange des Zylinder-Kolbenaggregates (18, 19) gelegen ist bzw. sind und die Stirnflächen beider Kolbenstangen (20, 106 bzw. 21, 107) in der Zwischenstellung der Zahnstangen (20, 21) der Zylinder-Kolbenaggregate (18, 19) aneinanderliegen.

4. Werkzeugwechselvorrichtung nach Anspruch 3, dadurch gekennzeichnet, dass der Kolben oder die Kolbenstange (106, 107) in ihrer Bewegungsbahn je einen Anschlag aufweisen, der die Mittelstellung der Zahnstangen (20, 21) bestimmt.

**Claims**

1. A tool changing device on a machine tool, more specially on a horizontal drilling and milling unit having a drilling spindle, comprising a two-armed changing arm (5 and 50) that at each of its two ends has a tongs-like gripping part, said changing arm (5 and 50) being able to be turned about its horizontal axis and being turningly supported on a rocking arm (6 and 60) that is able to be rocked about an axis parallel to the axis of said changing arm, said rocking arm (6 and 60) and said changing arm (5 and 50) turning at the same time in opposite directions, the housing (4) supporting the rocking arm (6 and 60) and the changing arm (5 and 50) being placed on the spindle head (2) so that it may be moved in the length direction, characterized in that the rocking arm (6 and 60) is designed in the form of a hollow arm joined with a driven hollow shaft (24), said hollow arm housing planetary gearing (27 to 29), said planetary gearing (27 to 29) being driven by a driving shaft (25) running through the hollow shaft (24), said hollow shaft (24) and said driving (25) being able to be driven and locked separately from each other by driving piston units (18 and 19) using racks (20 and 21), said racks (20 and 21) driving said hollow shaft (24) and said driving shaft (25) with a transmission ratio in keeping with the ratio of the rocking motion of the rocking arm (6 and 60) to the turning motion, taking place at the same time but in the opposite direction, of the changing arm (5 and 50).

2. The tool changing unit as claimed in claim 1, characterized in that the hollow shaft (24) and the driving shaft (25) have external gear teeth (22 and 24) thereon and in each case a rack (20 and 21) designed in the form of a piston rod of a driving piston unit (18 and 19) that is at all times in mesh with the teeth (22 and 23) of the two said shafts.

3. The tool changing unit as claimed in claim 1 or claim 2, characterized in that one of the two driving cylinder units (18 and 19) has a cylinder (104 and 105) acting in the opposite direction and the piston rods (106 and 107) thereof is or are placed coaxially to the rack of the driving piston unit (18 and 19) and the end faces of the two piston rods (20 and 106 or 21 and 107) in the other case are spaced from each other in the inbetween position of the racks (20 and 21) of the driving piston units (18 and 19).

4. The tool changing unit as claimed in claim 3 characterized in that the piston of the piston rod (106 and 107) each have a stop in the line of motion thereof, said stop fixing the middle position of the racks (20 and 21).

**Revendications**

1. Dispositif de changement d'outils pour machines-outils, en particulier pour aléseuses- fraiseuses horizontales à broche comportant un bras de changement à deux bras (5, 50) qui est muni, à chacune de ses extrémités, d'un dispositif de préhension en forme de pince, peut pivoter autour de son axe horizontal et est monté, de manière à pouvoir tourner, sur un bras de pivotement (6, 60) qui peut pivoter autour d'un axe parallèle à l'axe du bras de changement, le bras de pivotement (6, 60) et le bras de changement (5, 50) effectuant simultanément des mouvements de rotation opposés et l'enveloppe (4) portant le bras de pivotement (6, 60) et le bras de changement (5, 50) étant montés sur la poupée de broche (2) de manière à pouvoir se déplacer dans le sens longitudinal, caractérisé en ce que le bras de pivotement (6, 60) a la forme d'un arbre creux qui est relié à un arbre creux (24) entraîné par un moteur et comporte, pour la rotation du bras de changement (5, 50), un engrenage à roue planétaire (27–29) qui est entraîné par un arbre de commande (15) passant à travers l'arbre creux (24) et en ce que l'arbre creux (24) et l'arbre de commande (25) peuvent être mis en mouvement et arrêtés indépendamment l'un de l'autre, par l'intermédiaire des crémaillères (20, 21), par des ensembles cylindre-piston (18, 19), les crémaillères (20, 21) entraînant l'arbre creux (24) et l'arbre de commande (25) avec un rapport d'engrenage correspondant au rapport entre les mouvements de pivotement du bras de pivotement (6, 60) et le mouvement de rotation opposé simultané du bras de changement (5, 50).

2. Dispositif de changement d'outils selon la revendication 1, caractérisé en ce que l'arbre creux (24) et l'arbre de commande (25) comportent des dents extérieures (22, 23) et en ce que chacune des crémaillères (20, 21) constituant la tige de piston d'un ensemble cylindre-piston (18, 19) est en prise directe constante avec les dents (22 ou 23) des deux arbres.

3. Dispositif de changement d'outils selon l'une des revendications 1 ou 2, caractérisé en ce qu'à l'un des ensembles cylindre-piston ou aux deux ensembles cylindre-piston (18, 19) correspondent un ou deux contre-cylindres (104, 105) dont la ou les tiges de piston (106, 107) est ou sont montées de manière à avoir le même axe que la ou les crémaillères de l'ensemble cylindre-piston (18, 19) et en ce que les surfaces frontales des deux tiges de piston (20, 106, 21, 107) sont, dans la position intermédiaire des crémaillères (20, 21) des ensembles cylindre-piston (18, 19), appliquées les unes contre les autres.

4. Dispositif de changement d'outils selon la revendication 3, caractérisé en ce que le piston et la tige de piston (106, 107) ont chacun sur leur trajet une butée qui détermine la position médiane des crémaillères (20, 21).

0 030 674

Fig.1

Fig.2

7

0 030 674

Fig.3

Fig. 4

Fig. 5

Fig. 6

Fig. 7

9

Fig. 8

Fig. 9

Fig. 10

Fig. 11

Fig. 12

Fig.13

Fig.14

Fig.15

Fig.16

Fig.17

Fig.18

*Fig.19*

*Fig.20*

*Fig.21*

*Fig.22*